# EUROPÄISCHE PATENTSCHRIFT

(11) **EP 3 962 758 B1**
(45) Veröffentlichungstag und Bekanntmachung des Hinweises auf die Patenterteilung: **30.10.2024**
(21) Anmeldenummer: 20722459.3
(22) Anmeldetag: 20.04.2020
(51) Int. Cl.: B60C 23/00

(54) **NABENABDECKUNG FÜR EINE REIFENBEFÜLLVORRICHTUNG EINES FAHRZEUGS**
HUB COVERING FOR A TYRE FILLING DEVICE OF A VEHICLE
RECOUVREMENT DE MOYEU POUR UN DISPOSITIF DE REMPLISSAGE DE PNEUMATIQUE D'UN VÉHICULE

(30) Priorität: 03.05.2019 DE 102019111422
(43) Veröffentlichungstag der Anmeldung: 09.03.2022
(73) Patentinhaber: BPW Bergische Achsen KG, 51674 Wiehl (DE)
(72) Erfinder: WASSERFUHR, Wilfried, 51709 Marienheide (DE); TIMM, Andreas, 51674 Wiehl (DE)
(74) Vertreter: DREISS Patentanwälte PartG mbB
(86) Internationale Anmeldenummer: PCT/DE2020/100322
(87) Internationale Veröffentlichungsnummer: WO 2020/224703

(56) Entgegenhaltungen:
- US-A- 2 156 841
- US-A1- 2005 194 079
- US-A1- 2009 241 655
- US-A1- 2014 261 941

## Beschreibung

Die Erfindung betrifft eine Nabenabdeckung für eine Reifenbefüllvorrichtung eines Fahrzeugs zur Abdeckung einer Radnabe des Fahrzeugs, wobei eine Luftversorgung, welche mit einem innerhalb der Radnabe angeordneten Achsschenkel gekoppelt ist, über eine an der Nabenabdeckung angeordnete Drehverbindung zumindest mittelbar mit einem Luftvolumen in einem Reifen eines Fahrzeugrades verbunden ist. Ferner betrifft die Erfindung eine Reifenbefüllvorrichtung, umfassend zumindest eine erfindungsgemäße Nabenabdeckung sowie ein Adapter für eine solche Nabenabdeckung.

Zur Sicherstellung eines jederzeit ausreichenden Luftdrucks in Fahrzeugreifen sind bordeigene Reifenfüllsysteme bekannt, die den Luftdruck im Fahrzeugreifen überwachen und fehlendes Luftvolumen, ggf. auch während der Fahrt, ersetzen. Hierzu befindet sich an Bord des Fahrzeugs ein Luftkompressor, von dem aus eine Luftzuleitung zu dem jeweiligen Reifen führt. Da sich der Reifen mit dem Fahrzeugrad dreht, weist die Druckleitung zumindest eine bewegliche Schnittstelle auf, das heißt eine rotationsfähige, gleichwohl abgedichtete Druckluftverbindung. Diese stellt hohe Anforderungen an eine auch dauerhafte Abdichtung.

Aus der EP 1 265 761 B1 geht ein Luft-Füllsystem für ein Fahrzeug mit wenigstens einer Achse hervor. An jedem Ende der Achse ist wenigstens ein mit einem Luftreifen versehenes Rad angeordnet. Das System weist eine Luftversorgung, eine Luftverbindung mit einer Drehverbindung zwischen der Luftversorgung und den Reifen auf. Ferner weist das System eine Druckverstärkerpumpe mit einem Einlass und einem Auslass zum Verstärken des Luftdrucks von der Luftversorgung zu den Reifen auf, wobei der Einlass mit der Luftversorgung und der Auslass mit der Drehverbindung und den Reifen verbunden sind. Die Druckverstärkerpumpe ist dazu eingerichtet, den Luftdruck von der Luftversorgung zu erhöhen.

Aus der US 2005/194079 A1 ist in automatisches Reifenaufblassystem bekannt, bei dem Luft für rotierende Reifen durch eine Luftverbindung zwischen einer Luftversorgung und jedem der Reifen übertragen wird. Insbesondere eine Radkappenstruktur gezeigt, die einen abnehmbaren Stopfen enthält, der eine einfache Möglichkeit bietet, das Schmiermittel in der Radkappe zu überprüfen oder nachzufüllen, und der die Wartung oder den Austausch der Verschleißteile in der rotierenden Luftverbindung ermöglicht, ohne dass das Reifenfüllsystem demontiert werden muss.

Die US 2014/261941 A1 zeigt eine Baugruppe zur Verwendung in einem Fahrzeug-Reifenfüllsystem. Die Baugruppe soll ermöglichen, dass die rotierenden und nicht rotierenden Teile des Reifenaufblassystems miteinander in Verbindung stehen, dass der Druck in der Nähe der Baugruppe abgelassen werden kann und dass verhindert wird, dass Schmiermittel austritt, wenn der Druck abgelassen wird.

Aus der US 2009/241655 A1 sind verschiedene Ausführungsformen von Reifenaufblassystemen bekannt, die die Zuverlässigkeit und die Wartungsfreundlichkeit von solchen Systemen verbessern. In der bevorzugten Ausführungsformen ist ein Reifenaufblassystem mit mindestens einer Achse, die ein unter Druck stehendes Fluid aufnimmt, einer von der Achse getragenen Nabenabdeckung, die eine Innenseite und eine Außenseite aufweist, einer Drehdurchführung, die axial mit der Achse ausgerichtet ist und von der Außenseite der Nabenabdeckung an der Nabenabdeckung befestigt ist, und einer Schmierfalle, die axial mit der Achse ausgerichtet ist, die Drehdurchführung trägt und von der Außenseite der Nabenabdeckung an der Nabenabdeckung zur Drehung mit der Nabenabdeckung befestigt ist, versehen.

Die US 2156 841 A betrifft Einrichtungen an einem Kraftfahrzeug zum Aufpumpen von Luftreifen und zur Anzeige des Reifendrucks an einer zentralen Stelle, z.B. am Armaturenbrett. Ferner sind die Einrichtungen betriebssicher und können ohne weiteres in vorhandene Fahrzeuge eingebaut werden.

Der Erfindung liegt die Aufgabe zugrunde, eine alternative Nabenabdeckung für eine Reifenbefüllvorrichtung eines Fahrzeugs vorzuschlagen, die eine dauerhaft drehbare Schnittstelle für die Druckleitung der Luftversorgung bereitstellt. Die Aufgabe wird gelöst durch den Gegenstand des Patentanspruchs 1. Bevorzugte Ausführungsformen sind den jeweiligen abhängigen Ansprüchen zu entnehmen.

Eine erfindungsgemäße Nabenabdeckung für eine Reifenbefüllvorrichtung eines Fahrzeugs ist zur Abdeckung einer Radnabe des Fahrzeugs vorgesehen, wobei eine Luftversorgung, welche mit einem innerhalb der Radnabe angeordneten Achsschenkel gekoppelt ist, über eine an der Nabenabdeckung angeordnete Drehverbindung zumindest mittelbar mit einem Luftvolumen in einem Reifen eines Fahrzeugrades verbunden ist, wobei die Drehverbindung einen Adapter umfasst, der axial gesichert und drehbar an der Nabenabdeckung angeordnet ist und einen Drehübertrager zum Herstellen einer Druckluftverbindung mit dem Reifen des Fahrzeugrades aufnimmt.

Die Nabenabdeckung ist insbesondere Bestandteil einer Reifenbefüllvorrichtung für ein Fahrzeug, die den Vorteil eines bordeigenen Luftkompressors nutzt, indem die Kontrolle sowie gegebenenfalls das Nachfördern von Luftdruck in den jeweiligen Reifen des Fahrzeugrades jederzeit und auch während der Fahrt möglich sind.

Zwischen der Nabenabdeckung und dem Adapter der Drehverbindung besteht eine drehbare und zugleich dichte Verbindung, so dass der Drehübertrager zusammen mit den weiteren Bestandteilen der Drehverbindung stets in Richtung eines Belüftungsventils des Reifens ausgerichtet ist.

Vorzugsweise ist zwischen dem Drehübertrager und dem Adapter ein elastisches Druckausgleichselement angeordnet. Das Druckausgleichselement kommt an einer ersten Schulter des Adapters zur Anlage, wobei die erste Schulter des Adapters sowohl eine axiale also auch eine radiale Beweglichkeit des Druckausgleichselements begrenzt und diese somit sicher in ihrer Position hält. Das Druckausgleichselement wirkt im Wesentlichen wie eine Membran, wobei wenn der Luftdruck innerhalb der Luftversorgung einen Grenzwert übersteigt, über die Membran ein Druckausgleich realisiert wird, um die Bauteile der Reifenbefüllvorrichtung zu schützen.

Bevorzugt ist eine Schutzkappe zur Abdeckung des Druckausgleichselements vorgesehen, wobei die Schutzkappe axial am Adapter zur Anlage kommt. Die Schutzkappe ist vorteilhafterweise axial zwischen dem Drehübertrager und dem Adapter angeordnet und kommt an einer zweiten Schulter des Adapters zur Anlage. Durch die Schutzkappe wird sichergestellt, dass das Druckausgleichselement uns insbesondere der Nabeninnenraum vor äußeren Einflüssen geschützt ist. Zudem ist möglich, das Druckausgleichselement mittels der Schutzkappe axial vorzuspannen. Mit anderen Worten wird der Raum, in dem das Druckausgleichselement angeordnet ist, durch den Adapter und die Schutzkappe begrenzt.

Ferner bevorzugt weist der Adapter zumindest eine axial durchgehende Bohrung auf. Durch die zumindest eine Bohrung wird infolge einer Leckage der Luftversorgung der Reifenbefüllvorrichtung ein Druckausgleich realisiert, wobei der Raum, in dem das Druckausgleichselement angeordnet ist, über die zumindest eine Bohrung mit dem Inneren der Nabenabdeckung verbunden ist. Die zumindest eine Bohrung kann je nach Ausgestaltung und Material des Adapters als im Wesentlichen axiale Aussparung ausgebildet sein, sodass auf weitere Bearbeitungsschritte zur Herstellung des Adapters verzichtet werden kann. Insbesondere sind drei Bohrungen am Adapter ausgebildet.

Vorzugsweise weist der Adapter stirnseitig eine erste umlaufende Nut zur Aufnahme eines Radialwellendichtrings auf. Diese Nut ist an einer dem Drehübertrager zugewandten Stirnseite des Adapters ausgebildet und mit der zumindest einen Bohrung räumlich verbunden. Im Fall einer Leckage der Luftversorgung kommt es zu einem Überdruck im Nabeninnenraum. Übersteigt der Überdruck einen Grenzwert, erfolgt ein Druckausgleich primär über den Radialwellendichtring und sekundär über das Druckausgleichselement. Gleichzeitig schützen der Radialwellendichtring und das Druckausgleichselement den Nabeninnenraum vor dem Eindringen von Schmutz und/oder Feuchtigkeit.

Erfindungsgemäß weist der Adapter einen rohrförmigen Abschnitt und einen flanschförmigen Abschnitt auf, wobei der rohrförmige Abschnitt zumindest teilweise durch eine Öffnung der Nabenabdeckung hindurchgeführt ist und der flanschförmige Abschnitt axial von fahrzeugaußen an der Nabenabdeckung zur Anlage kommt.

Vorzugsweise ist am Außenumfang des rohrförmigen Abschnitts des Adapters eine zweite umlaufende Nut ausgebildet, die zur Aufnahme eines Sprengrings vorgesehen ist. Damit wird der Adapter mittels dessen flanschförmigen Abschnitts sowie des Sprengrings relativ zur Nabenabdeckung axial gesichert, wobei eine beliebige Rotation des Adapters zusammen mit dem Drehübertrager relativ zur Nabenabdeckung zur Ausrichtung des Drehübertragers möglich ist. Der Sprengring ist insbesondere als Runddrahtsprengring ausgebildet.

Bevorzugt ist an einer radnabenseitigen Stirnfläche des flanschförmigen Abschnitts des Adapters eine umlaufende Ausnehmung zur Aufnahme eines Dichtrings ausgebildet. Mithin wird durch den Dichtring die Dichtigkeit des Nabeninnenraums gegenüber der Außenatmosphäre sichergestellt, wobei die eine Dichtfläche an dem Adapter und die dazu korrespondierende Dichtgegenfläche an der Nabenabdeckung ausgebildet ist. Vorzugsweise ist die Dichtgegenfläche die fahrzeugaußenseitige Stirnfläche der Nabenabdeckung. Zusätzlich wird der Nabeninnenraum durch den Dichtring vor unerwünschtem Eintritt von Feuchtigkeit und Schmutz geschützt.

Ferner bevorzugt weist der Drehübertrager einen axialen Abschnitt und zumindest einen radialen Abschnitt auf. Der Drehübertrager kann somit beispielsweise als Winkelstück mit einem einzigen radialen Abschnitt oder als T-Stück mit zwei vorzugsweise gegenüberliegenden radialen Abschnitten ausgebildet sein.

Des Weiteren bevorzugt weist der Drehübertrager an einem radnabenseitigen Ende und/oder an einem reifenseitigen Ende ein Außengewinde auf. Durch das jeweilige Außengewinde lässt sich der Drehübertrager auf einfache Weise am Adapter oder an weiteren Leitungen der Luftversorgung, insbesondere einer Druckluftleitung befestigen, die dann jeweils beispielsweise ein dazu korrespondierendes Innengewinde aufweisen. Der Adapter kann eine werkzeugspezifische Außenkontur bzw. eine Schlüsselfläche aufweisen, die es ermöglicht, den Adapter während des Einschraubens des Drehübertragers am Adapter mittels eines Werkzeugs, insbesondere eines Schraubschlüssels drehfest zu halten.

Der Adapter kann mehrteilig ausgebildet sein. So ist denkbar, dass der Adapter beispielsweise eine metallische oder eine aus Kunststoff ausgebildete Hülse mit einem Innengewinde aufweist, in das der Drehübertrager eingeschraubt werden kann. Die Hülse ist dazu zur Ausbildung des Adapters von einem Kunststoff umspritzt. Die Hülse weist aufgrund der höheren mechanischen Anforderungen eine höhere Festigkeit auf als der restliche Körper des Adapters. Alternativ kann der Adapter auch einteilig aus einem Kunststoff ausgebildet sein, wobei der Adapter lediglich eine axiale Bohrung oder Durchgangsöffnung aufweist. Das Außengewinde des Drehübertragers gräbt sich dann während des Einschraubens des Drehübertragers am Adapter in die Innenmantelfläche der Durchgangsöffnung ein.

Je tiefer der Drehübertrager im Adapter eingeschraubt wird, desto größer ist dementsprechend die Dichtigkeit zwischen dem Adapter und dem Drehübertrager.

Des Weiteren bevorzugt weist der Drehübertrager an einem radnabenseitigen Ende eine Leitungsstange in Gestalt eines Röhrchens auf, die dazu ausgebildet ist, die Luftversorgung ausgehend vom Achsschenkel mit dem Drehübertrager zu verbinden. Anders gesagt ist die Leitungsstange zwischen dem axialen Abschnitt des Drehübertragers sowie dem Achsschenkel angeordnet, wobei die Leitungsstange vorzugsweise axial in ein Aufnahmestück am Achsschenkel abdichtend eingeführt wird.

Vorzugsweise weist die Nabenabdeckung ein Innengewinde auf, das korrespondierend zu einem Außengewinde an der Radnabe ausgebildet ist. Dazu korrespondierend ist an der Radnabe ein entsprechendes Außengewinde ausgebildet, sodass die Nabenabdeckung über ein Schraubgewinde an der Radnabe befestigbar ist. Bevorzugt ist zwischen der Radnabe und der Nabenabdeckung ein Dichtring angeordnet, wodurch eine Abdichtung des Nabeninnenraums gegenüber der Außenatmosphäre insbesondere im Hinblick auf einen Schutz vor einem Eindringen von Feuchtigkeit und Schmutz in den Nabeninnenraum realisiert wird.

Die Erfindung betrifft ferner eine Reifenbefüllvorrichtung nach Anspruch 14 für ein Fahrzeug, wobei das Fahrzeug bevorzugt zumindest eine Achse umfasst, die an jedem Ende eine Radnabe aufweist, auf der mindestens ein Rad mit einem jeweiligen mit Druckluft befüllten Reifen angeordnet ist. Die jeweilige Radnabe ist derart ausgebildet, dass die erfindungsgemäße Nabenabdeckung druckdicht damit verbunden ist. Die Reifenbefüllvorrichtung weist eine Luftversorgung auf, die über die Nabenabdeckung und der daran angeordneten Drehverbindung mit dem Luftvolumen des Reifens verbunden ist.

Außerdem betrifft die Erfindung einen Adapter nach Anspruch 15.

Im Folgenden ist die Erfindung anhand von zwei bevorzugten Ausführungsbeispielen unter Bezugnahme auf die Zeichnungen und die darin wiedergegebenen Einzelheiten näher erläutert.

Es zeigen:
Fig. 1 eine schematische Schnittdarstellung einer erfindungsgemäßen Reifenbefüllvorrichtung gemäß einer ersten Ausführungsform, und
Fig. 2 eine in einer als Längsschnitt wiedergegebenen Explosionsdarstellung der vereinzelten Elemente der Reifenbefüllvorrichtung gemäß einer zweiten Ausführungsform.

Die hier beschriebene Nabenabdeckung ist besonders geeignet für Nutzfahrzeuge und insbesondere nicht-angetriebene Achsen von Nutzfahrzeugen und Nutzfahrzeuganhängern.

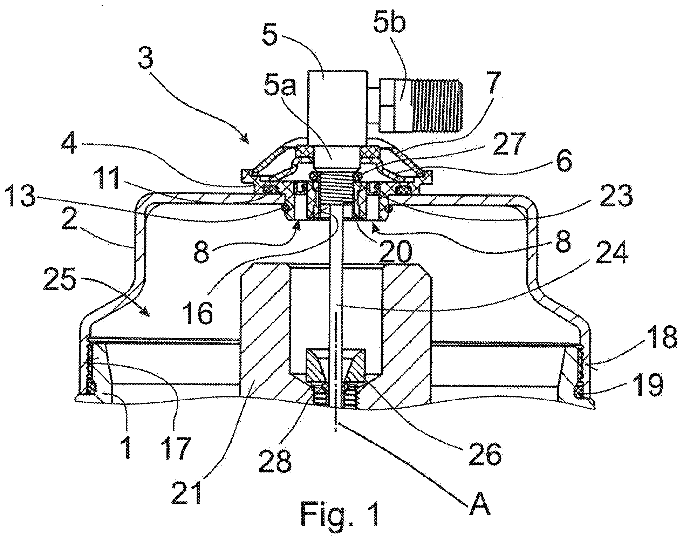

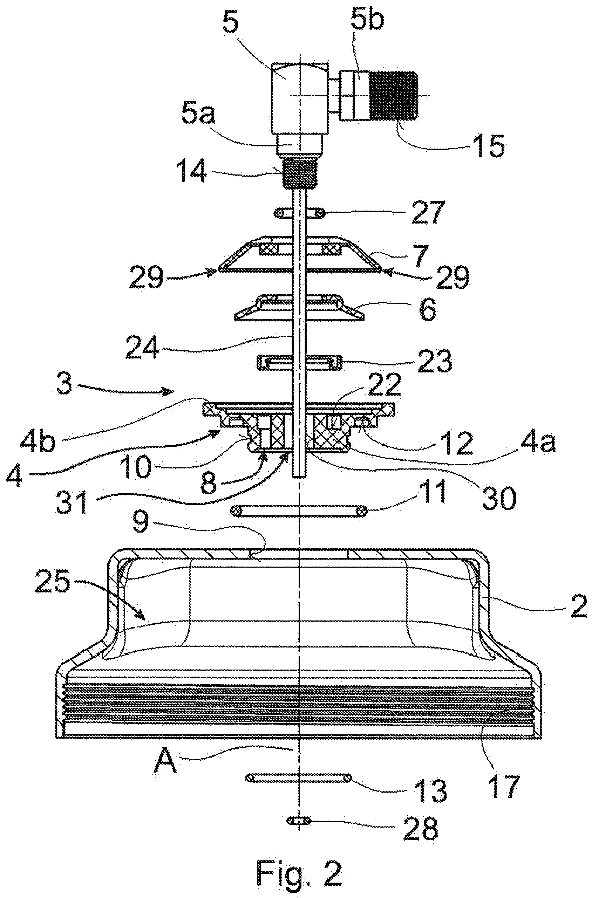

Gemäß Fig. 1 und Fig. 2 ist die Nabenabdeckung 2 für eine - hier nicht näher gezeigte - Reifenbefüllvorrichtung eines Fahrzeugs vorgesehen, wobei die Nabenabdeckung 2, wie in Fig. 1gezeigt, eine das jeweilige Fahrzeugrad tragende Radnabe 1 des Fahrzeugs abdeckt. Die Radnabe 1 ist über mindestens ein Wälzlager auf einem Achsschenkel 21 drehgelagert. Der Achsschenkel 21 der Fahrzeugachse ist mit einer - hier ebenfalls nicht dargestellten - Luftversorgung gekoppelt. Die Luftversorgung ist dazu ausgebildet, zumindest einen Reifen des jeweiligen Fahrzeugrads mit Druckluft zu versorgen.

Die Nabenabdeckung 2 ist kappenartig gestaltet und weist ein Innengewinde 17 auf, das korrespondierend zu einem Außengewinde 18 der Radnabe 1 ausgebildet ist, so dass im montierten Zustand zwischen der Nabenabdeckung 2 und der Radnabe 1 eine druckdichte Schraubverbindung vorliegt. Zum Schutz eines Nabeninnenraums 25 und vor allem der Wälzlager gegenüber Feuchtigkeit und/oder Schmutz aus der Außenatmosphäre ist ferner ein Dichtring 19 vorgesehen, der nach Fig. 1zwischen der Radnabe 1 und der Nabenabdeckung 2 angeordnet ist.

Die Luftversorgung des - hier nicht gezeigten - Reifens eines Fahrzeugrades erfolgt über eine an der kappenartigen Nabenabdeckung 2 angeordnete Drehverbindung 3, welche die Luftversorgung der Reifenbefüllvorrichtung mit einem Luftvolumen des Reifens verbindet.

Die Drehverbindung 3 befindet sich in Verlängerung der Achslinie A der Fahrzeugachse und umfasst einen Adapter 4, der axialgesichert und drehbar an der Nabenabdeckung 2 angeordnet ist, und der einen Drehübertrager 5 zur Ausbildung der Druckluftverbindung mit dem Reifen aufnimmt.

Der auf der Achslinie A angeordnete Drehübertrager 5 weist an dessen radnabenseitigen Ende ein Außengewinde 14 auf, um eine Schraubverbindung mit dem Adapter 4 zu realisieren. Ferner weist der Drehübertrager 5 an dessen reifenseitigen Ende ebenfalls ein Außengewinde 15 auf, um eine Schraubverbindung mit weiteren - hier nicht dargestellten - Elementen der Luftversorgung, z. B. einem Druckschlauch zu ermöglichen. Vorliegend ist der Drehübertrager 5 als Winkelstück ausgebildet, umfassend einen axialen Abschnitt 5a und einen um 90 ° dazu abgewinkelten radialen Abschnitt 5b, wobei der axiale Abschnitt 5a koaxial zur Nabenabdeckung 2 und dem Adapter 4 angeordnet ist. Alternativ kann der Drehübertrager 5 auch zwei oder mehr radiale Abschnitte 5b aufweisen.

Am axialen Abschnitt 5a des Drehübertragers 5 ist eine Leitungsstange 24 in Gestalt eines Röhrchens fixiert, die zur Verbindung des Drehübertragers 5 mit der im Achsschenkel 21 integrierten Luftversorgung in ein Aufnahmestück 26 am Achsschenkel 21 abgedichtet eingeführt ist. Die Abdichtung der Luftversorgung erfolgt im Wesentlichen durch einen Dichtring 28 zwischen dem Aufnahmestück 26 und der rohrförmigen Leitungsstange 24.

Der Adapter 4 ist mit dessen rohrförmigen Abschnitt 4a durch eine zentrische Öffnung 9 der Nabenabdeckung 2 hindurchgeführt, wobei an diesem Abschnitt 4a eine umlaufende Nut 10 ausgebildet ist, die einen als Sicherungsring ausgebildeten Sprengring 13 zur axialen Sicherung des Adapters 4 gegenüber der Nabenabdeckung 2 aufnimmt, wobei der Adapter 4 dadurch relativ zur Nabenabdeckung 2 zwar axial gesichert, jedoch beliebig verdrehbar ist. Der Adapter 4 kommt ferner mit dessen flanschförmigen Abschnitt 4b axial von fahrzeugaußen an der Nabenabdeckung 2 zur Anlage, wobei am flanschförmigen Abschnitt 4b radnabenseitig eine umlaufende Ausnehmung 12 ausgebildet ist, um einen Dichtring 11, insbesondere einen O-Ring aufzunehmen. Der Dichtring 11 ist somit axial zwischen der Nabenabdeckung 2 und dem Adapter 4 eingeklemmt und dichtet den Nabeninnenraum 25 nach fahrzeugaußen hin ab.

Der Adapter 4 weist ferner stirnseitig eine erste umlaufende Nut 22 zur Aufnahme eines Radialwellendichtrings 23 auf. Der Radialwellendichtring 23 verhindert, dass Feuchtigkeit und/oder Schmutz in den Nabeninnenraum 25 eindringen kann. Darüber hinaus bewirkt der Radialwellendichtring 23 einen Druckausgleich, wenn es im Nabeninnenraum 25 infolge einer Leckage der Luftversorgung zu einem Überdruck kommt. Der Radialwellendichtring 23 ist ortsfest in der Nut 22 fixiert.

Zwischen dem Drehübertrager 5 und dem Adapter 4 ist ein elastisches Druckausgleichselement 6 angeordnet, das als Membran fungiert. Das Druckausgleichselement 6 ist im Wesentlichen trichterförmig ausgebildet und kommt axial sowohl am Adapter 4 als auch am Drehübertrager 5 zur Anlage. Der Adapter 4 ist derart ausgebildet, dass das Druckausgleichselement 6 daran radial gesichert ist.

Das Druckausgleichselement 6 wird vor äußeren Einflüssen wie Feuchtigkeit und Schmutz durch eine aus Kunststoff ausgebildete Schutzkappe 7 geschützt, die zur Abdeckung des Druckausgleichselements 6 axial am Adapter 4 zur Anlage kommt und dort ebenfalls radial gesichert ist. Mit anderen Worten begrenzen die Schutzkappe 7 und der Adapter 4 einen Raum, in dem das Druckausgleichselement 6 aufgenommen ist, wobei dieser Raum über drei am Adapter 4 ausgebildete axial durchgehende Bohrungen 8 mit dem Nabeninnenraum 25 verbunden ist, um einen Druckausgleich realisieren zu können. Die Bohrungen 8 sind räumlich mit der Nut 22 verbunden.

Damit bei Überdruck überschüssige Luft aus dem Nabeninnenraum 25 entweichen kann, sind an der Schutzkappe 7 mehrere schlitzförmige und radial verlaufende Auslassöffnungen 29 vorgesehen. Die Auslassöffnungen 29 sind in Fig. 2 gezeigt. In Fig. 1 sind aus perspektivischen Gründen nur zwei der Bohrungen 8 dargestellt, wobei in Fig. 2lediglich eine Bohrung 8 gezeigt ist. Kommt es im Nabeninnenraum 25 zu einem Überdruck, wird über den Radialwellendichtring 23 sowie das Druckausgleichselement 6 ein Druckausgleich realisiert, indem die überschüssige Luft über die Auslassöffnungen 29 in die Atmosphäre abgegeben wird.

Die beiden Ausführungsformen gemäß Fig. 1 und Fig. 2 unterscheiden sich darin, dass der Adapter 4 nach Fig. 1 zweiteilig und nach Fig. 2 einteilig ausgebildet ist.

Nach Fig. 1 besteht ein erstes Teil des Adapters 4 aus einem rohrförmigen Abschnitt 4a sowie einem flanschförmigen Abschnitt 4b. Anders gesagt weist der erste Teil des Adapters 4 eine axial durchgehende Öffnung auf, die zur Aufnahme eines zweiten Teils des Adapters 4 vorgesehen ist, wobei der zweite Teil als Hülse 20 ausgebildet ist, um den Drehübertrager 5 axial aufzunehmen. Die Hülse 20 des Adapters 4 weist ein Innengewinde 16 auf, das korrespondierend zu einem Außengewinde 14 an einem radnabenseitigen Ende des Drehübertragers 5 ausgebildet ist. Die Hülse 20 kann beispielsweise aus einem Metall mit einer höheren Festigkeit ausgebildet sein, um die mechanischen Kräfte beim Einschrauben des Drehübertragers 5 in die Hülse 20 aufnehmen zu können. Die Hülse 20 kann in einem Herstellungsprozess von einem Kunststoff zur Ausbildung des zweiteiligen Adapters 4 umspritzt werden.

Der Adapter 4 gemäß Fig. 2 ist demgegenüber einteilig aus einem Kunststoff ausgebildet und weist lediglich eine axiale Durchgangsöffnung 31 zur Aufnahme des axialen Abschnitts 5a des Drehübertragers 5 auf. Anders gesagt weist der Adapter 4 kein Innengewinde auf, sodass sich das Außengewinde 14 des Drehübertragers 5 bei einem Einschrauben in eine Innenmantelfläche 30 der Durchgangsöffnung 31 gräbt, um eine zusätzliche Dichtwirkung zu erzielen.

### Bezugszeichenliste

1 : Radnabe
2 : Nabenabdeckung
3 : Drehverbindung
4 : Adapter
4a : rohrförmiger Abschnitt des Adapters
4b : flanschförmiger Abschnitt des Adapters
5 : Drehübertrager
5a : axialer Abschnitt des Drehübertragers
5b : radialer Abschnitt des Drehübertragers
6 : Druckausgleichselement
7 : Schutzkappe
8 : Bohrung
9 : Öffnung
10 : Nut
11 : Dichtring
12 : Ausnehmung
13 : Sprengring
14 : Außengewinde am radnabenseitigen Ende des Drehübertragers
15 : Außengewinde am reifenseitigen Ende des Drehübertragers
16 : Innengewinde am Adapter
17 : Innengewinde an der Nabenabdeckung
18 : Außengewinde an der Radnabe
19 : Dichtring
20 : Hülse
21 : Achsschenkel
22 : Nut
23 : Radialwellendichtring
24 : Leitungsstange
25 : Nabeninnenraum
26 : Aufnahmestück
27 : Dichtring
28 : Dichtring
29 : Auslassöffnung
30 : Innenmantelfläche
31 : Durchgangsöffnung
A : Achslinie

## Patentansprüche

1. Nabenabdeckung für eine Reifenbefüllvorrichtung eines Fahrzeugs zur Abdeckung einer auf einer Achslinie (A) drehbaren Radnabe (1) des Fahrzeugs, wobei eine Luftversorgung, welche mit einem innerhalb der Radnabe (1) angeordneten Achsschenkel (21) gekoppelt ist, über eine an der Nabenabdeckung (2) angeordnete Drehverbindung (3) zumindest mittelbar mit einem Luftvolumen in einem Reifen eines Fahrzeugrades verbunden ist, wobei die Drehverbindung (3) einen Adapter (4) umfasst, der axial gesichert und drehbar an der Nabenabdeckung (2) angeordnet ist und einen Drehübertrager (5) zum Herstellen einer Druckluftverbindung mit dem Reifen des Fahrzeugrades aufnimmt, wobei der Adapter (4) einen rohrförmigen Abschnitt (4a) und einen flanschförmigen Abschnitt (4b) aufweist, wobei der rohrförmige Abschnitt (4a) zumindest teilweise durch eine Öffnung (9) der Nabenabdeckung (2) hindurchgeführt ist und der flanschförmige Abschnitt (4b) axial von fahrzeugaußen an der Nabenabdeckung (2) zur Anlage kommt, und wobei der Adapter (4) zumindest eine Strömungsverbindung (8) zwischen seiner der Radnabe (1) zugewandten Innenseite und seiner von der Radnabe (1) abgewandten Stirnseite aufweist, **dadurch gekennzeichnet, dass** Teil der Strömungsverbindung (8) eine die Achslinie (A) umlaufende Nut (22) ist, die einen Radialwellendichtring (23) aufnimmt.

2. Nabenabdeckung nach Anspruch 1, **dadurch gekennzeichnet, dass** der Drehübertrager (5) als ein starres, druckluftführendes Winkelstück bestehend aus einem auf der Achslinie (A) angeordneten axialen Schenkel (Sa) und zumindest einem quer zu der Achslinie (A) angeordneten Schenkel (Sb) ausgebildet ist.

3. Nabenabdeckung nach Anspruch 2, **dadurch gekennzeichnet, dass** der Adapter (4) zur drehfesten Aufnahme des Drehübertragers (5) mit einem Innengewinde (16, 30) versehen ist, in das ein an dem axialen Schenkel (Sa) ausgebildetes Außengewinde (14) fest eingeschraubt ist.

4. Nabenabdeckung nach Anspruch 2 oder 3, **dadurch gekennzeichnet, dass** der Drehübertrager (5) eine aus dem axialen Schenkel (Sa) herausführende, rohrförmige Leitungsstange (24) aufweist, die dazu ausgebildet ist, Druckluft von dem Achsschenkel (21) zu dem Drehübertrager (5) zu führen.

5. Nabenabdeckung nach einem der vorangehenden Ansprüche, **dadurch gekennzeichnet, dass** die Nut (22) in der Stirnseite des Adapters (4) ausgebildet ist.

6. Nabenabdeckung nach einem der vorangehenden Ansprüche, **dadurch gekennzeichnet, dass** zwischen dem Drehübertrager (5) und dem Adapter (4) ein elastisches Druckausgleichselement (6) angeordnet ist.

7. Nabenabdeckung nach Anspruch 6, **gekennzeichnet durch** eine Schutzkappe (7) zur Abdeckung des Druckausgleichselements (6), wobei die Schutzkappe (7) axial am Adapter (4) zur Anlage kommt.

8. Nabenabdeckung nach einem der vorangehenden Ansprüche, **dadurch gekennzeichnet, dass** am Außenumfang des rohrförmigen Abschnitts (4a) des Adapters (4) eine weitere umlaufende Nut (10) ausgebildet ist, die einen Sprengring (13) aufnimmt.

9. Nabenabdeckung nach einem der vorangehenden Ansprüche, **dadurch gekennzeichnet, dass** an einer der Radnabe (1) zugewandten Stirnfläche des flanschförmigen Abschnitts (4b) des Adapters (4) eine umlaufende Ausnehmung (12) zur Aufnahme eines Dichtrings (11) ausgebildet ist.

10. Nabenabdeckung nach einem der vorangehenden Ansprüche, **dadurch gekennzeichnet, dass** die Nabenabdeckung (2) ein Innengewinde (17) aufweist, das korrespondierend zu einem Außengewinde (18) an der Radnabe (1) ausgebildet ist.

11. Nabenabdeckung nach einem der vorangehenden Ansprüche, **dadurch gekennzeichnet, dass** zwischen der Radnabe (1) und der Nabenabdeckung (2) ein Dichtring (19) angeordnet ist.

12. Nabenabdeckung nach einem der vorangehenden Ansprüche, **dadurch gekennzeichnet, dass** der Adapter (4) eine Schlüsselfläche, vorzugsweise in der Gestalt eines Mehrkants, zum Ansetzen eines Werkzeugs aufweist.

13. Reifenbefüllvorrichtung für ein Fahrzeug, umfassend zumindest eine Nabenabdeckung (2) nach einem der Ansprüche 1 bis 12 .

14. Adapter (4) für eine Drehverbindung einer Nabenabdeckung, wobei der Adapter (4) dazu ausgebildet ist, axialgesichert und drehbar an der Nabenabdeckung (2) angeordnet zu sein sowie einen Drehübertrager (5) zum Herstellen einer Druckluftverbindung mit einem Reifen eines Fahrzeugrades aufzunehmen, wobei der Adapter (4) einen rohrförmigen Abschnitt (4a) und einen flanschförmigen Abschnitt (4b) aufweist, wobei der rohrförmige Abschnitt (4a) zumindest teilweise durch eine Öffnung (9) der Nabenabdeckung (2) hindurchführbar ist und der flanschförmige Abschnitt (4b) dazu ausgelegt ist, axial von fahrzeugaußen an der Nabenabdeckung (2) zur Anlage zu kommen, wobei der Adapter (4) zumindest eine Strömungsverbindung (8) zwischen seiner der Radnabe (1) zuzuwendenden Innenseite und seiner von der Radnabe (1) abzuwendenden Stirnseite aufweist, **dadurch gekennzeichnet, dass** Teil der Strömungsverbindung (8) eine die Achslinie (A) umlaufende Nut (22) ist, welche dazu ausgelegt ist, einen Radialwellendichtring (23) aufzunehmen.

## Claims

1. Hub cover for a tire filling device of a vehicle, for covering a wheel hub (1) of the vehicle that can rotate on an center line (A), wherein an air supply, which is coupled to a steering knuckle (21) arranged inside the wheel hub (1), is at least indirectly connected to an air volume in a tire of a vehicle wheel via a rotary connection (3) arranged on the hub cover (2), wherein the rotary connection (3) comprises an adapter (4) which is axially secured and rotatably arranged on the hub cover (2) and accommodates a rotary transmitter (5) for establishing a compressed air connection with the tire of the vehicle wheel, wherein the adapter (4) has a tubular portion (4a) and a flange-shaped portion (4b), wherein the tubular portion (4a) extends at least partially through an opening (9) in the hub cover (2), and the flange-shaped portion (4b) comes to rest axially on the hub cover (2) from outside the vehicle, and wherein the adapter (4) has at least one flow connection (8) between its inner face facing the wheel hub (1) and its end face facing away from the wheel hub (1), **characterized in that**
part of the flow connection (8) is a groove (22) which surrounds the center line (A) and receives a radial shaft sealing ring (23).

2. Hub cover according to claim 1, **characterized in that** the rotary transmitter (5) is designed as a rigid, compressed air-conducting angle piece consisting of an axial leg (Sa) arranged on the center line (A) and at least one leg (Sb) arranged transversely to the center line (A).

3. Hub cover according to claim 2, **characterized in that** the adapter (4) for the rotationally fixed accommodation of the rotary transmitter (5) is provided with an internal thread (16, 30) into which an external thread (14) formed on the axial leg (Sa) is firmly screwed.

4. Hub cover according to claim 2 or 3, **characterized in that** the rotary transmitter (5) has a tubular line rod (24) which leads out of the axial leg (Sa) and is designed to guide compressed air from the steering knuckle (21) to the rotary transmitter (5).

5. Hub cover according to any of the preceding claims,
**characterized in that** the groove (22) is formed in the end face of the adapter (4).

6. Hub cover according to any of the preceding claims, **characterized in that** an elastic pressure compensation element (6) is arranged between the rotary transmitter (5) and the adapter (4).

7. Hub cover according to claim 6,
**characterized by**
a protective cap (7) for covering the pressure compensation element (6), wherein the protective cap (7) comes into axial contact with the adapter (4).

8. Hub cover according to any of the preceding claims, **characterized in that** a further circumferential groove (10) which receives a snap ring (13) is formed on the outer circumference of the tubular portion (4a) of the adapter (4).

9. Hub cover according to any of the preceding claims, **characterized in that** a circumferential recess (12) for receiving a sealing ring (11) is formed on an end face of the flange-shaped portion (4b) of the adapter (4) facing the wheel hub (1).

10. Hub cover according to any of the preceding claims, **characterized in that** the hub cover (2) has an internal thread (17) which is designed to correspond to an external thread (18) on the wheel hub (1).

11. Hub cover according to any of the preceding claims **characterized in that** a sealing ring (19) is arranged between the wheel hub (1) and the hub cover (2).

12. Hub cover according to any of the preceding claims **characterized in that** the adapter (4) has a key surface, preferably in the shape of a polygon, for attaching a tool.

13. Tire filling device for a vehicle, comprising at least one hub cover (2) according to any of claims 1 to 12.

14. Adapter (4) for a rotary connection of a hub cover, wherein the adapter (4) is designed to be axially secured and rotatably arranged on the hub cover (2) and to accommodate a rotary transmitter (5) for establishing a compressed air connection with a tire of a vehicle wheel,
wherein the adapter (4) has a tubular portion (4a) and a flange-shaped portion (4b), wherein the tubular portion (4a) can extend at least partially through an opening (9) in the hub cover (2), and the flange-shaped portion (4b) is designed to come to rest axially on the hub cover (2) from outside the vehicle, wherein the adapter (4) has at least one flow connection (8) between its inner face facing the wheel hub (1) and its end face facing away from the wheel hub (1),
**characterized in that** part of the flow connection (8) is a groove (22) which surrounds the center line (A) and is designed to accommodate a radial shaft sealing ring (23).

## Revendications

1. Cache de moyeu pour un dispositif de gonflage de pneu d'un véhicule pour recouvrir un moyeu de roue (1) du véhicule pouvant tourner sur une ligne d'essieu (A), dans lequel une alimentation en air, laquelle est couplée à une fusée d'essieu (21) disposée à l'intérieur du moyeu de roue (1), est reliée au moins indirectement à un volume d'air dans un pneu d'une roue de véhicule par l'intermédiaire d'une liaison rotative (3) disposée sur le cache de moyeu (2), la liaison rotative (3) comprenant un adaptateur (4) qui est bloqué axialement et disposé de manière rotative sur le cache de moyeu (2) et reçoit un transmetteur rotatif (5) pour établir une liaison d'air comprimé avec le pneu de la roue de véhicule, dans lequel l'adaptateur (4) présente une section tubulaire (4a) et une section en forme de bride (4b), dans lequel la section tubulaire (4a) est guidée au moins partiellement à travers une ouverture (9) du cache de moyeu (2) et la section en forme de bride (4b) vient s'appuyer axialement sur le cache de moyeu (2) depuis l'extérieur du véhicule, et dans lequel l'adaptateur (4) présente au moins une liaison d'écoulement (8) entre sa face intérieure tournée vers le moyeu de roue (1) et sa face frontale opposée au moyeu de roue (1), **caractérisé en ce qu'**une partie de la liaison d'écoulement (8) est une rainure (22) entourant la ligne d'essieu (A), qui reçoit une bague d'étanchéité d'arbre radiale (23).

2. Cache de moyeu selon la revendication 1, **caractérisé en ce que** le transmetteur rotatif (5) est réalisé en tant que pièce coudée rigide, guidant l'air comprimé, constituée d'une branche axiale (Sa) disposée sur la ligne d'essieu (A) et d'au moins une branche (Sb) disposée transversalement à la ligne d'essieu (A).

3. Cache de moyeu selon la revendication 2, **caractérisé en ce que** l'adaptateur (4) est pourvu d'un filetage intérieur (16, 30) dans lequel est vissé de manière fixe un filetage extérieur (14) réalisé sur la branche axiale (Sa), pour recevoir le transmetteur de rotation (5) de manière solidaire en rotation.

4. Cache de moyeu selon la revendication 2 ou 3, **caractérisé en ce que** le transmetteur rotatif (5) présente une tige de conduite tubulaire (24) sortant de la branche axiale (Sa), qui est réalisée pour guider l'air comprimé de la fusée d'essieu (21) au transmetteur rotatif (5).

5. Cache de moyeu selon l'une quelconque des revendications précédentes, **caractérisé en ce que** la rainure (22) est réalisée dans la face frontale de l'adaptateur (4).

6. Cache de moyeu selon l'une quelconque des revendications précédentes, **caractérisé en ce qu'**un élément de compensation de pression (6) élastique est disposé entre le transmetteur rotatif (5) et l'adaptateur (4).

7. Cache de moyeu selon la revendication 6, **caractérisé par** un capuchon de protection (7) pour recouvrir l'élément de compensation de pression (6), dans lequel le capuchon de protection (7) vient s'appliquer axialement sur l'adaptateur (4).

8. Cache de moyeu selon l'une quelconque des revendications précédentes, **caractérisé en ce qu'**une autre rainure périphérique (10) est réalisée sur la périphérie extérieure de la section tubulaire (4a) de l'adaptateur (4), qui reçoit un jonc d'arrêt (13).

9. Cache de moyeu selon l'une quelconque des revendications précédentes, **caractérisé en ce qu'**un évidement périphérique (12) destiné à recevoir une bague d'étanchéité (11) est réalisé sur une face frontale, tournée vers le moyeu de roue (1), de la section en forme de bride (4b) de l'adaptateur (4).

10. Cache de moyeu selon l'une quelconque des revendications précédentes, **caractérisé en ce que** le cache de moyeu (2) présente un filetage intérieur (17) qui est réalisé en correspondance avec un filetage extérieur (18) sur le moyeu de roue (1).

11. Cache de moyeu selon l'une quelconque des revendications précédentes, **caractérisé en ce qu'**une bague d'étanchéité (19) est disposée entre le moyeu de roue (1) et le cache de moyeu (2).

12. Cache de moyeu selon l'une quelconque des revendications précédentes, **caractérisé en ce que** l'adaptateur (4) présente une surface de clé, de préférence sous la forme d'un polygone, pour y appliquer un outil.

13. Dispositif de gonflage de pneu pour un véhicule, comprenant au moins un cache de moyeu (2) selon l'une quelconque des revendications 1 à 12

14. Adaptateur (4) pour une liaison rotative d'un cache de moyeu, dans lequel l'adaptateur (4) est réalisé pour être bloqué axialement et disposé de manière rotative sur le cache de moyeu (2) et pour recevoir un transmetteur rotatif (5) pour établir une liaison d'air comprimé avec un pneu d'une roue de véhicule, dans lequel l'adaptateur (4) présente une section tubulaire (4a) et une section en forme de bride (4b), dans lequel la section tubulaire (4a) peut être guidée au moins partiellement à travers une ouverture (9) du cache de moyeu (2) et la section en forme de bride (4b) est conçue pour venir s'appuyer axialement sur le cache de moyeu (2) depuis l'extérieur du véhicule, dans lequel l'adaptateur (4) présente au moins une liaison d'écoulement (8) entre sa face intérieure destinée à être tournée vers le moyeu de roue (1) et sa face frontale destinée à être détournée du moyeu de roue (1), **caractérisé en ce qu'**une partie de la liaison d'écoulement (8) est une rainure (22) faisant le tour de la ligne d'essieu (A), laquelle est conçue pour recevoir une bague d'étanchéité d'arbre radiale (23).
